# EUROPÄISCHE PATENTSCHRIFT

(11) **EP 1 078 176 B1**
(45) Veröffentlichungstag und Bekanntmachung des Hinweises auf die Patenterteilung: **06.03.2002**
(21) Anmeldenummer: 99920742.6
(22) Anmeldetag: 22.04.1999
(51) Int. Cl.: F16F 15/126, F16F 15/14, B60K 17/22

(54) **ÜBERTRAGUNGSELEMENT ZUR KRAFT- UND/ODER MOMENTENÜBERTRAGUNG, SCHWINGUNGSTILGER UND VERFAHREN ZUR DÄMPFUNG VON SCHWINGUNGEN**
TRANSMISSION ELEMENT FOR THE TRANSMISSION OF POWER AND/OR MOMENTS, OSCILLATION DAMPER AND METHOD FOR OSCILLATION DAMPING
ELEMENT DE TRANSMISSION POUR LA TRANSMISSION DE FORCES ET/OU DE COUPLES, AMORTISSEUR D'OSCILLATIONS ET PROCEDE D'AMORTISSEMENT D'OSCILLATIONS

(30) Priorität: 12.05.1998 DE 19821165
(43) Veröffentlichungstag der Anmeldung: 28.02.2001
(73) Patentinhaber: Volkswagen Aktiengesellschaft, 38436 Wolfsburg (DE)
(72) Erfinder: MARETZKE, Jürgen, D-38550 Isenbüttel (DE); SELLSCHOPP, Jürgen, D-38122 Braunschweig (DE)
(86) Internationale Anmeldenummer: EP9902718
(87) Internationale Veröffentlichungsnummer: WO9958876

(56) Entgegenhaltungen:
- JP-A- 8 233 031
- US-A- 4 207 957
- US-A- 5 326 324

## Beschreibung

Die Erfindung beschäftigt sich mit einem Übertragungselement zur Übertragung von Kräften und/oder Momenten, insbesondere für Kraftfahrzeuge, mit einem Schwingungstilger.

Übertragungselemente sind in den vielfältigsten Ausführungsformen und Anwendungsfällen bekannt. Mittels dieser Übertragungselemente werden Kräfte und/oder Momente von einem Ort an einen anderen weitergeleitet.

So werden in einem Kraftfahrzeug Kräfte und Momente zur Steuerung und Regelung von Bewegungsabläufen über Gestänge oder andere Übertragungselemente übertragen. Beispielsweise wird das vom Fahrer am Lenkrad erzeugte Drehmoment zur Richtungssteuerung des Fahrzeugs über eine Lenksäule zum Lenkgetriebe weitergeleitet.

Aufgrund verschiedenster Konstellationen besteht die Gefahr, daß das Übertragungselement zu Schwingungen angeregt wird. Diese sind zumeist unerwünscht und beeinträchtigen den Komfort.

Zur Reduzierung und/oder Tilgung der Schwingungen ist der Einsatz eines Schwingungstilgers bekannt.

So schlägt die DE 37 061 35 A1 vor, unerwünschte Axialschwingungen einer Ausgleichskupplung eines Einspritzpumpenantriebs durch eine Dämpfungseinrichtung zu unterdrücken. Die Dämpfungseinrichtung besteht im wesentlichen aus einer innerhalb einer Hohlwelle angeordneten elastomeren Masse, in deren Mitte ein Bolzen eingebettet ist.

In der US-A-5,326,324 ist ein Stand der Technik gemäß Oberbegriff des Anspruchs 1 bzw. 11 beschrieben mit in einer Wirkebene gleichen Dämpfungseigenschaften.

Der vorliegenden Erfindung liegt das Problem zugrunde, das gattungsbildende Übertragungselement und den Schwingungstilger derart weiterzubilden, daß der Anwendungsbereich erweitert wird. Weiterhin soll ein Verfahren zur Dämpfung von Schwingungen aufgezeigt werden.

Das Problem bezüglich des Übertragungselementes wird durch die Merkmale des Anspruches 1 gelöst und dasjenige bezüglich des Schwingungstilgers durch die Merkmales des Anspruches 11.

Bedingt durch die mit dem Übertragungselement in Wirkverbindung stehende Komponente kann das Übertragungselement zu asymmetrischen Schwingungen angeregt werden.

Schwingungen treten grundsätzlich in verschiedenen Formen auf. Ein starrer Körper, der elastisch aufgehängt ist, kann zu Längsschwingungen und zu Drehschwingungen, ein elastischer Körper zusätzlich zu Biegeschwingungen und zu Torsionsschwingungen angeregt werden. Zur weiteren Abgrenzung wird zwischen symmetrischen und asymmetrischen Schwingungen unterschieden. Bei den symmetrischen Schwingungen erfolgen die Schwingungsbewegungen symmetrisch zu einer Bezugsachse des Körpers. Im Gegensatz dazu haben asymmetrische Schwingungen unterschiedliche Amplituden und Frequenzen bezüglich der Bezugsachse des Körpers.

Die vorliegende Erfindung beschäftigt sich mit asymmetrischen Schwingungen bzw. deren Dämpfung und Tilgung an Übertragungselementen. Als Bezugsachse dient eine Längsachse des Übertragungselements.

Es versteht sich, daß unter Dämpfung und Tilgung von Schwingungen jegliche Reduzierung der Bewegungsamplituden und der damit verbundenen wirksamen Kräfte verstanden wird.

Zur Dämpfung der asymmetrischen Schwingung des Übertragungselements ist ein asymmetrisch ausgebildeter Schwingungstilger vorgesehen, der mit dem Übertragungselement in Wirkverbindung steht. Durch die asymmetrische Ausbildung des Schwingungstilgers werden asymmetrische Dämpfungseigenschaften erreicht, so daß die auftretenden asymmetrischen Schwingungen besser gedämpft werden, als dies mit einem symmetrischen Schwingungstilger der Fall wäre.

Der Schwingungstilger wird in der Regel möglichst nah im Schwingungsbauch, also am Ort mit maximaler Schwingungsamplitute, angeordnet sein, da dies zumeist der beste Ort für eine wirksame Schwingungsdämpfung ist.

Beispielsweise treten an Lenksäulen von Kraftfahrzeugen häufig asymmetrische Schwingungen auf. Durch die Integration anderer Komponenten, wie z.B. Airbags und elektrische Schaltelemente, und die Notwendigkeit, freier Sicht auf die Instrumente zu schaffen, werden Lenkräder meist asymmetrisch ausgeführt. Da ein Fahrzeug überwiegend geradeaus fährt, befindet sich das Lenkrad als Komponente bevorzugt in einer Mittellage. In dieser Position wird die Lenksäule als Übertragungselement hinsichtlich Schwingungsform und -frequenz quer zur Fahrzeuglängsachse zu anderen Schwingungen angeregt als senkrecht dazu.

Der Schwingungstilger kann im Bereich einer Außenwandung des Übertragungselements angeordnet sein, wodurch eine einfache Montage und Kontrolle bezüglich Justierung und Beschädigung möglich ist.

Bei Verwendung eines hohlen Übertragungselements kann der Schwingungstilger auch innerhalb des Übertragungselements angeordnet sein. Diese Anordnung ist platzsparend und schützt den Schwingungstilger vor Beschädigung und Dejustierung.

Welche Form der Anordnung letztendlich gewählt wird, hängt von den jeweiligen Gegebenheiten des Einzelfalls ab.

Es können auch mehrere Schwingungstilger am und/oder im Übertragungselement angeordnet sein. Dies ist insbesondere dann sinnvoll, wenn z.B. eine längere Übertragungsstange zu unterschiedlichen Schwingungsformen angeregt wird, d.h. mehrere Orte mit maximaler Schwingungsamplitude vorliegen. In diesem Fall ist es von Vorteil, in jedem Schwingungsbauch einen entsprechend ausgelegten, d.h. auf die jeweilige Frequenz abgestimmten, Schwingungstilger zu fixieren.

Der Schwingungstilger kann eine Tilgermasse und ein elastisches Koppelelement, beispielsweise gefertigt aus elastomerem Kunststoff, aufweisen, wobei die Wirkverbindung zwischen dem Schwingungstilger und dem Übertragungselement über das elastische Koppelelement erfolgt.

Das elastische Koppelelement kann asymmetrisch ausgebildet sein, um die gewünschten asymmetrischen Dämpfungseigenschaften des Schwingungstilgers zu erzielen. Dazu wird das elastische Koppelelement in einer bevorzugten Querachse massiver ausgebildet als in einer Querachse senkrecht dazu, was z.B. durch Bohrungen, Hohlräume oder ganz fehlendes Material erreicht werden kann. In der Querachse, in der das elastische Koppelelement massiv ausgebildet ist, liegt eine höhere Steifigkeit vor, so daß der Schwingungstilger in dieser Richtung eine höhere Eigenfrequenz aufweist. Im Gegensatz dazu ist das elastische Koppelelement senkrecht zu der Querachse oder in einer anderen Richtung zu dieser flexibler, d.h. weniger steif, ausgebildet, so daß der Schwingungstilger in dieser Richtung eine tiefere Eigenfrequenz besitzt. Die Eigenfrequenz des Schwingungstilgers bestimmt jeweils denjenigen Frequenzbereich, in dem er an dem mit ihm verbundenen Bauteil, hier dem Übertragungselement, auftretende Schwingungen dämpft.

Bei Verwendung einer Hohlwelle als Übertragungselement kann zwischen diesem und dem elastischen Koppelelement des Schwingungstilgers eine Hülse angeordnet sein. Die Hülse ist preiswert herzustellen, schützt das elastische Koppelelement vor Beschädigung bei der Montage und erleichtert diese.

Die Tilgermasse des Schwingungstilgers kann mit elastischem Material, z.B. Gummi, beschichtet sein. Die elastische Beschichtung dämpft Anschlaggeräusche die entstehen können, wenn die Tilgermasse unbeabsichtigt Kontakt mit dem Übertragungselement bekommt. Außerdem schützt die elastische Beschichtung sowohl die Tilgermasse als auch das Übertragungselement vor mechanischer Beschädigung und vor Korrosion.

Die elastische Beschichtung der Tilgermasse kann auch in Form von hervorstehenden Noppen ausgebildet sein. Hierdurch werden Anschlaggeräusche aufgrund der größeren Flexibilität noch wirksamer als bei gleichmäßiger Beschichtung gedämpft.

Dem Übertragungselement kann eine Justiereinrichtung zugeordnet sein. Diese kann an dem Übertragungselement und/oder dem Schwingungstilger angeordnet sein. Dies gewährleistet, daß der asymmetrisch ausgebildete Schwingungstilger in der gewünschten Position und mit der gewünschten Ausrichtung am oder im Übertragungselement sicher montierbar ist und dort verbleibt. Die Justierung kann, bei Verwendung einer Hohlwelle, beispielsweise durch einen Längsschlitz in der Hülse des Schwingungstilgers und durch einen Steg oder einen Stift in der Hohlwelle erfolgen.

Weitere Justiereinrichtungen sind möglich und dem Fachmann bekannt.

Der Schwingungstilger kennzeichnet sich dadurch aus, daß das Koppelelement asymmetrische elastische Eigenschaften in einer Wirkebene aufweist bezüglich einer anderen wirkebene mit symmetrischen elastischen Eigenschaften. Der Schwingungstilger weist eine Tilgermasse und ein mit ihm verbundenes elastisches Koppelelement auf, wobei das Koppelelement in einer Wirkebene asymmetrische elastische Eigenschaften besitzt. Das Koppelelement steht zumeist sowohl mit der Tilgermasse selbst als auch mit einer Komponente, z.B. einem Übertragungselement, welches asymmetrisch zu unerwünschten Schwingungen angeregt wird, in Wirkverbindung. Die Wirkverbindung kann jeweils über eine form- und/oder kraftschlüssige Verbindung hergestellt werden.

Die asymmetrischen elastischen Eigenschaften des Koppelelementes können durch eine asymmetrische Formgebung bewirkt werden. So kann der Schwingungstilger mit einem asymmetrisch geformten elastischen Koppelelement eines homogenen Materials versehen sein. In diesem Fall werden die gewünschten asymmetrischen Dämpfungseigenschaften des Schwingungstilgers dadurch erzielt, daß das Koppelelement in einer Richtung in einer Ebene senkrecht zur Längsachse des Schwingungstilgers eine andere Steifigkeit aufweist als in einer anderen Richtung, beispielsweise in einer Querrichtung.

Der Schwingungstilger kann aber auch mit einem elastischen Koppelelement versehen sein, in dem verschiedene Materialien mit jeweils unterschiedlichen Materialeigenschaften asymmetrisch kombiniert werden. In diesem Fall werden die gewünschten asymmetrischen Dämpfungseigenschaften des Schwingungstilgers dadurch erzielt, daß die asymmetrisch ausgebildete Steifigkeit des elastischen Koppelelements durch die unterschiedlichen Materialeigenschaften, insbesondere durch die unterschiedliche Steifigkeit, der in ihm kombinierten Materialien hervorgerufen wird.

Denkbar ist auch, daß das elastische Koppelelement des Schwingungstilgers sowohl durch Formgebung als auch durch die Kombination unterschiedlicher Materialien asymmetrisch ausgebildet ist und somit die gewünschten asymmetrischen Dämpfungseigenschaften des Schwingungstilgers erzielt werden.

Im folgenden wird die Erfindung beispielhaft an einer Lenksäule eines Kraftfahrzeugs weiter erläutert.

Es zeigen, jeweils in schematisierter Darstellung,
- Figur 1: eine Seitenansicht eines Übertragungselementes,
- Figur 2: einen Längsschnitt durch einen Schwingungstilger und
- Figur 3: einen Querschnitt durch einen Schwingungstilger.

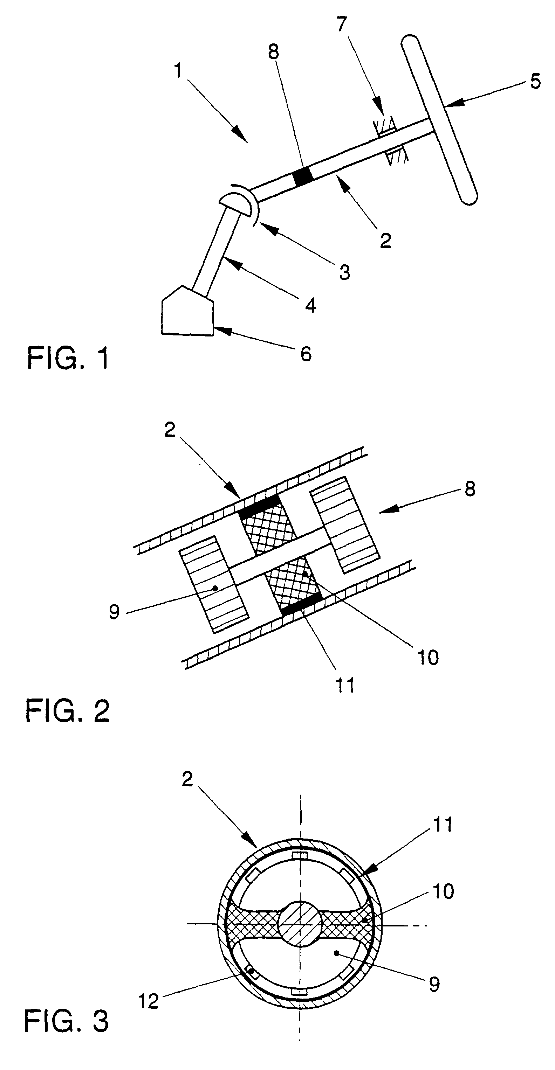

In der Figur 1 ist ein als Lenksäule ausgebildetes Übertragungselement 1 dargestellt, welches eine hohle Lenkstange 2, ein Kardangelenk 3 und eine zweite Lenkstange 4 aufweist. Das Übertragungselement 1 überträgt die Drehbewegung eines Lenkrades 5 an ein Lenkgetriebe 6. Die Lenkstange 2 ist in der Nähe des Lenkrades 5 in einem Lager 7 drehbar angeordnet. Durch im Fahrzeug auftretende Vibrationen und Stöße wird die Lenkstange 2 zu Biegeschwingungen angeregt. Da senkrecht zur Zeichenebene andere Frequenzen und Schwingungsformen angeregt werden als in der Zeichenebene, treten an der Lenkstange 2 bezogen auf ihre Längsachse asymmetrische Schwingungen auf. Diese Asymmetrie wird durch die asymmetrische Ausbildung der Lenksäulensteifigkeit verstärkt.

Zur Dämpfung der asymmetrischen Schwingungen wird innerhalb der hohlen Lenkstange 2 an geeigneter Stelle ein Schwingungstilger 8 angeordnet. Dieser Schwingungstilger 8 besteht, wie in Figur 2 gezeigt, im wesentlichen aus einer Tilgermasse 9, die kompakt ausgeführt ist und in der Mitte eine Einschnürung aufweist. In dieser Einschnürung ist die Tilgermasse 9 mit einem elastischen Koppelelement 10 verbunden. Das elastische Koppelelement 10 ist umgeben von einer Hülse 11, über welche der Schwingungstilger 8 mit dem Übertragungselement 2 verbunden und somit eine Wirkverbindung hergestellt ist.

Wie in Figur 3 im Querschnitt gezeigt, ist das elastische Koppelelement 10, bezogen auf eine Längsachse, asymmetrisch ausgebildet. In einer Achse der Wirkebene weist das elastische Koppelelement 10 massive und somit steife Eigenschaften auf, senkrecht dazu aufgrund des fehlenden Materials flexiblere und somit weichere. In Richtung der Achse mit steifer Ausbildung dämpft der Schwingungstilger 8 eine hohe Frequenz, in Richtung der Achse mit weicher Ausbildung dagegen eine tiefe Frequenz. Der Schwingungstilger 8 weist somit asymmetrische Dämpfungseigenschaften auf.

In Figur 3 sind weiterhin Noppen 12 dargestellt, mit denen die Tilgermasse 9 beschichtet ist und die beispielsweise aus Gummi bestehen können. Durch diese Beschichtung werden Anschlaggeräusche gedämpft und Beschädigungen vermieden, die entstehen können, wenn die Tilgermasse 9 bei bestimmten Schwingungsformen unbeabsichtigt Kontakt mit der Lenkstange 2 bekommt.

### BEZUGSZEICHENLISTE

- 1: Übertragungselement
- 2: Lenkstange
- 3: Kardangelenk
- 4: zweite Lenkstange
- 5: Lenkrad
- 6: Lenkgetriebe
- 7: Lager
- 8: Schwingungstilger
- 9: Tilgermasse
- 10: Koppelelement
- 11: Hülse
- 12: Noppen

## Patentansprüche

1. Übertragungselement (1) zur Übertragung von Kräften und/oder Momenten, insbesondere Übertragungselement für Kraftfahrzeuge, wobei mit dem Übertragungselement eine Komponente (5) und ein Schwingungstilger (8) in Wirkverbindung stehen, **dadurch gekennzeichnet, daß** der Schwingungstilger (8) derart ausgebildet ist, daß er, um den in einer Wirkebene des Übertragungselementes (1) asymmetrisch auftretenden und von der Komponente (5) bedingten Schwingungen am Übertragungselement (1) entgegen zu wirken, in dieser Wirkebene bezüglich einer anderen wirkebene mit symmetrischen elastischen Eigenschaften asymmetrische elastische Eigenschaften aufweist.

2. Übertragungselement nach Anspruch 1,
**dadurch gekennzeichnet,**
**daß** der Schwingungstilger (8) im Bereich einer Außenwandung des Übertragungselementes (1) angeordnet ist.

3. Übertragungselement nach Anspruch 1,
**dadurch gekennzeichnet,**
**daß** der Schwingungstilger (8) innerhalb des Übertragungselements (1) angeordnet ist.

4. Übertragungselement nach einem oder mehreren der vorhergehenden Ansprüche, **dadurch gekennzeichnet, daß** mehrere Schwingungstilger (8) vorgesehen sind.

5. Übertragungselement nach einem oder mehreren der vorhergehenden Ansprüche,
**dadurch gekennzeichnet,**
**daß** der Schwingungstilger (8) eine Tilgermasse (9) und ein elastisches Koppelelement (10) aufweist, über das der Schwingungstilger (8) mit dem Übertragungselement (1) in Wirkverbindung steht.

6. Übertragungselement nach Anspruch 5,
**dadurch gekennzeichnet,**
**daß** das Koppelelement (10) eine asymmetrische Ausbildung aufweist

7. Übertragungselement nach Anspruch 5 oder 6,
**dadurch gekennzeichnet,**
**daß** zwischen dem hohlen Übertragungselement (1) und dem elastischen Koppelelement (10) des Schwingungstilgers (8) eine Hülse angeordnet ist.

8. Übertragungselement nach einem oder mehreren der Ansprüche 5 bis 7,
**dadurch gekennzeichnet,**
**daß** die Tilgermasse (9) des Schwingungstilgers (8) mit elastischem Material beschichtet ist.

9. Übertragungselement nach Anspruch 8,
**dadurch gekennzeichnet,**
**daß** das elastische Material noppenförmig ausgebildet ist.

10. Übertragungselement nach einem oder mehreren der Ansprüche 1 bis 9,
**dadurch gekennzeichnet,**
**daß** eine Justiereinrichtung vorgesehen und dem Übertragungselement (1) zugeordnet ist.

11. Schwingungstilger (8), insbesondere zur Verwendung in einem Übertragungselement (1) in Kraftfahrzeugen, mit einer Tilgermasse (9) gekoppelt mit einem elastischen Koppelelement (10),
**dadurch gekennzeichnet,**
**daß** das Koppelelement (10) asymmetrische elastische Eigenschaften in einer Wirkebene aufweist, bezüglich einer anderen wirkebene mit symmetrischen elastischen Eigenschaften.

12. Schwingungstilger nach Anspruch 11,
**dadurch gekennzeichnet;**
**daß** die asymmetrischen elastischen Eigenschaften des Koppelelements (10) durch eine asymmetrische Formgebung und/oder durch asymmetrische Anordnung unterschiedlicher Materialien im Koppelelement (10) bewirkt werden.

## Claims

1. Transmission element (1) for the transmission of forces and/or torques, in particular transmission element for motor vehicles, a component (5) and an oscillation damper (8) being in effective connection with the transmission element, **characterized in that** the oscillation damper (8) is designed in such a way that, in order to counteract the oscillations at the transmission element (1) occurring asymmetrically in a plane of action of the transmission element (1) and caused by the component (5), it has in this plane of action asymmetrical elastic properties in relation to another plane of action having symmetrical elastic properties.

2. Transmission element according to Claim 1, **characterized in that** the oscillation damper (8) is arranged in the region of an outer wall of the transmission element (1).

3. Transmission element according to Claim 1, **characterized in that** the oscillation damper (8) is arranged within the transmission element (1).

4. Transmission element according to one or more of the preceding claims, **characterized in that** a plurality of oscillation dampers (8) is provided.

5. Transmission element according to one or more of the preceding claims, **characterized in that** the oscillation damper (8) has a damper mass (9) and an elastic coupling element (10), via which the oscillation damper (8) is in effective connection with the transmission element (1).

6. Transmission element according to Claim 5, **characterized in that** the coupling element (10) has an asymmetrical construction.

7. Transmission element according to Claim 5 or 6, **characterized in that** a sleeve is arranged between the hollow transmission element (1) and the elastic coupling element (10) of the oscillation damper (8).

8. Transmission element according to one or more of Claims 5 to 7, **characterized in that** the damper mass (9) of the oscillation damper (8) is covered with elastic material.

9. Transmission element according to Claim 8, **characterized in that** the elastic material is of knob-shaped design.

10. Transmission element according to one or more of Claims 1 to 9, **characterized in that** an adjusting device is provided and is associated with the transmission element (1).

11. Oscillation damper (8), in particular for use in a transmission element (1) in motor vehicles, with a damper mass (9) coupled to an elastic coupling element (10), **characterized in that** the coupling element (10) has asymmetrical elastic properties in a plane of action in relation to another plane of action having symmetrical elastic properties.

12. Oscillation damper according to Claim 11, **characterized in that** the asymmetrical elastic properties of the coupling element (10) are brought about by asymmetrical shaping and/or asymmetrical arrangement of different materials in the coupling element (10).

## Revendications

1. Elément de transmission (1) pour la transmission de forces et/ou de couples, en particulier élément de transmission pour véhicules à moteur, dans lequel un composant (5) et un amortisseur d'oscillations (8) sont en relation fonctionnelle avec l'élément de transmission, **caractérisé en ce que** l'amortisseur d'oscillations (8) est conçu de telle sorte que pour agir à l'encontre des oscillations sur l'élément de transmission (1), causées par le composant et se produisant asymétriquement dans un plan d'action de l'élément de transmission (1), celui-ci présente dans ce plan d'action des propriétés élastiques asymétriques, par rapport à un autre plan d'action avec des propriétés élastiques symétriques.

2. Elément de transmission selon la revendication 1, **caractérisé en ce que** l'amortisseur d'oscillations (8) est disposé dans la région d'une paroi extérieure de l'élément de transmission (1).

3. Elément de transmission selon la revendication 1, **caractérisé en ce que** l'amortisseur d'oscillations (8) est disposé à l'intérieur de l'élément de transmission (1).

4. Elément de transmission selon l'une ou plusieurs des revendications précédentes, **caractérisé en ce que** plusieurs amortisseurs d'oscillation (8) sont prévus.

5. Elément de transmission selon l'une ou plusieurs des revendications précédentes, **caractérisé en ce que** l'amortisseur d'oscillations (8) présente une masse d'amortissement (9) et un élément d'accouplement élastique (10), par l'intermédiaire duquel l'amortisseur d'oscillations (8) est en relation fonctionnelle avec l'élément de transmission (1).

6. Elément de transmission selon la revendication 5, **caractérisé en ce que** l'élément d'accouplement (10) présente une forme asymétrique.

7. Elément de transmission selon la revendication 5 ou 6, **caractérisé en ce qu'**entre l'élément de transmission creux (1) et l'élément d'accouplement élastique (10) de l'amortisseur d'oscillations (8) est disposée une gaine.

8. Elément de transmission selon l'une ou plusieurs des revendications 5 à 7, **caractérisé en ce que** la masse d'amortissement (9) de l'amortisseur d'oscillations (8) est recouverte d'un matériau élastique.

9. Elément de transmission selon la revendication 8, **caractérisé en ce que** le matériau élastique est conçu en forme de nope.

10. Elément de transmission selon l'une ou plusieurs des revendications 1 à 9, **caractérisé en ce qu'**un dispositif d'ajustement est prévu et associé à l'élément de transmission (1).

11. Amortisseur d'oscillations (8), en particulier pour l'utilisation dans un élément de transmission (1) dans des véhicules à moteur, comprenant une masse d'amortissement (9) accouplée à un élément d'accouplement élastique (10), **caractérisé en ce que** l'élément d'accouplement (10) présente des propriétés élastiques asymétriques dans un plan d'action par rapport à un autre plan d'action avec des propriété élastiques symétriques.

12. Amortisseur d'oscillations selon la revendication 11, **caractérisé en ce que** les propriétés élastiques asymétriques de l'élément d'accouplement (10) sont obtenues par une mise en forme asymétrique et/ou par un agencement asymétrique de divers matériaux dans l'élément d'accouplement (10).
